# FASCICULE DE BREVET EUROPEEN

(11) **EP 2 903 875 B1**
(45) Date de publication et mention de la délivrance du brevet: **24.05.2017**
(21) Numéro de dépôt: 13782732.5
(22) Date de dépôt: 24.09.2013
(51) Int. Cl.: B60W 30/09, B60W 30/18, B60W 50/00, G01S 19/42, B60W 30/095

(54) **PROCEDE D'EVALUATION DU RISQUE DE COLLISION A UNE INTERSECTION**
VERFAHREN ZUR BEURTEILUNG DER KOLLISIONSGEFAHR AN EINER KREUZUNG
METHOD FOR ASSESSING THE RISK OF COLLISION AT AN INTERSECTION

(30) Priorité: 05.10.2012 FR 1259493
(43) Date de publication de la demande: 12.08.2015
(73) Titulaire: Renault S.A.S., 92100 Boulogne-Billancourt (FR); Institut National de Recherche en Informatique et en Automatique, 78150 Le Chesnay (FR)
(72) Inventeur: LEFEVRE, Stéphanie, F-31370 Cugnaux (FR); IBANEZ-GUZMAN, Javier, F-78125 Raizeux (FR); LAUGIER, Christian, F-38330 Montbonnot-Saint-Martin (FR)
(74) Mandataire: Allain, Laurent
(86) Numéro de dépôt international: PCT/FR2013/052218
(87) Numéro de publication internationale: WO 2014/053735

(56) Documents cités:
- EP-A1- 2 495 713
- EP-A2- 1 096 458
- DE-A1-102006 023 544
- DE-A1-102010 044 631
- US-A1- 2009 224 942
- US-A1- 2011 153 166

## Description

L'invention se rapporte à un procédé d'évaluation du risque de collision à une intersection.

Les intersections sont les zones les plus dangereuses du réseau routier. A titre d'exemple, en 2004, 43% des accidents en Europe ont eu lieu au niveau d'une intersection. Ce sont aussi des zones particulièrement anxiogènes, surtout pour les conducteurs âgés, qui ont parfois du mal à analyser la scène et à prendre une décision adaptée au contexte de la situation. Il y a donc un grand intérêt à développer des systèmes sécuritaires, capables d'estimer précisément le risque d'une collision à une intersection. De tels systèmes peuvent être utilisés pour augmenter la conscience situationnelle du conducteur, qui approche puis traverse une intersection, et peuvent ainsi réduire le stress causé par la présence de ladite intersection et améliorer la sécurité dans ces zones. DE 10 2010 044631 A1 divulgue un procédé d'évaluation du risque de collision entre un premier véhicule s'approchant d'une intersection et au moins un deuxième véhicule évoluant au niveau de ladite intersection selon le préambule de la revendication 1. Le problème technique peut se résumer de la manière suivante. Un véhicule accumule au cours du temps :
- des informations sur son état par l'intermédiaire de ses capteurs proprioceptifs, comme par exemple un navigateur GPS (*de l'anglais* Global Positioning System) ou des données circulant sur son bus CAN (*de l'anglais,* Control Area Network),
- et des informations sur son environnement,
   ∘ via ses capteurs extéroceptifs embarqués, comme par exemple une caméra ou un radar, et/ou
   ∘ via un lien de communication avec les autres véhicules et/ou avec des bornes de communication intégrées à l'infrastructure routière, comme par exemple un standard de communication de type IEEE 802.11p.

Le véhicule dispose également d'une carte numérique statique de l'environnement, qui peut prendre plusieurs formes, comme par exemple unecarte 2D du réseau routier ou un nuage de points 3D de l'environnement. Cette carte contient des informations sur le contexte, par exemple sur les routes, sur les voies, ainsi que sur la réglementation en vigueur à chaque intersection, comme par exemple la limitation de la vitesse et/ou la présence d'un panneau de signalisation.

Pour estimer le risque d'une collision à une intersection, il est donc nécessaire de fusionner toutes ces informations et données dans l'espace et dans le temps, afin de reconstruire la situation réelle et donc d'évaluer les dangers potentiels.

Or, une difficulté souvent rencontrée en procédant de cette manière, réside dans le fait que ces données et informations sont incertaines, dues en particulier à des erreurs de mesure inhérentes aux capteurs, à des erreurs de localisation, et à des erreurs de carte. De plus, les intersections demeurent des zones complexes dans lesquelles l'évolution dans le temps d'un véhicule est plus dépendante de l'intention du conducteur que des caractéristiques physiques du véhicule, ceci rendant l'interprétation des données difficile et sujette à de nombreuses incertitudes.

Généralement, pour estimer le risque d'une collision à une intersection, les méthodes proposées reposent sur des modèles physiques, qui peuvent être dynamiques ou cinématiques, des véhicules pour prédire leurs trajectoires futures. Le risque est ainsi calculé comme une fonction de l'occurrence d'une collision sur ces trajectoires futures. Ce type de méthode présente deux limites :
- elle n'est applicable que pour les collisions à court terme, car les modèles physiques ne sont valides qu'à court terme. En effet, pour être capable de prédire de manière fiable les trajectoires à plus long terme, il faudrait raisonner à plus haut niveau, en intégrant par exemple l'intention de manoeuvre des conducteurs, et prendre en compte le contexte, comme par exemple la géométrie et la topologie de l'intersection ainsi que les règles de la circulation.
- elle est couteuse en temps de calcul, en raison de la prédiction des trajectoires potentielles de tous les véhicules présents à l'intersection, et de la détection des points d'intersection entre ces trajectoires, la longueur de ce temps de calcul étant incompatible avec les contraintes de temps réel des applications sécuritaires.

D'autres méthodes plus complètes, comme par exemple, celle qui est décrite dans la demande de brevet US2012/0016581, reposent sur la prise en compte de l'intention du conducteur à l'approche de l'intersection, en supposant par exemple, qu'il va tourner à droite ou à gauche, ou bien aller tout droit. L'évaluation des situations potentiellement dangereuses s'effectue alors en associant cette intention à la prédiction des trajectoires de tous les véhicules présents à l'intersection, et en évaluant les points d'intersection de ces trajectoires. Bien que plus complète et plus précise que les méthodes ci-avant mentionnées, cette méthode demeure très consommatrice en temps de calcul, et n'apparait pas plus adaptée pour mettre en oeuvre instantanément des applications sécuritaires.

Les procédés d'évaluation du risque de collision à une intersection selon l'invention, proposent un diagnostic rigoureux et précis en matière d'évaluation dudit risque tout en mettant en oeuvre une phase de calcul écourtée, tout à fait compatible avec les contraintes de temps réel des applications sécuritaires. Autrement dit, lesdits procédés allient qualité et performance, avec une rapidité d'exécution améliorée.

L'invention a pour objet un procédé d'évaluation du risque de collision entre un premier véhicule s'approchant d'une intersection et au moins un deuxième véhicule évoluant au niveau de ladite intersection, ledit premier véhicule étant doté de moyens de mesure et de moyens de calcul.

La principale caractéristique d'un procédé selon l'invention est qu'il comprend les étapes suivantes,
- une étape de détermination des positions respectives dudit premier véhicule et dudit deuxième véhicule,
- une étape d'estimation des intentions du conducteur dudit premier véhicule et dudit deuxième véhicule, en matière d'arrêt ou non à l'entrée de l'intersection et en matière de manoeuvre pour estimer la direction que compte prendre chacun desdits conducteurs à la sortie de ladite intersection,
- une étape d'estimation de la nécessité d'arrêt pour le premier véhicule et ledit deuxième véhicule à partir des résultats fournis par les deux étapes précédentes et des règles de la circulation en vigueur à ladite intersection,
- une étape d'estimation du risque de collision entre le premier véhicule et ledit deuxième véhicule, ladite estimation étant fondée sur une comparaison entre l'intention d'arrêt de chaque véhicule et la nécessité d'arrêt de ceux-ci.

Un tel procédé permet d'estimer un risque de collision du premier véhicule avec au moins un deuxième véhicule, sans avoir à évaluer les trajectoires potentielles desdits véhicules et à déterminer leur point d'intersection. Ce procédé évite ainsi l'utilisation de calculs trop longs et trop lourds, qui peuvent constituer des sources d'erreur, et est parfaitement adapté aux contraintes de temps réel des applications sécuritaires. Il est supposé que le premier véhicule constitue le véhicule source, et qu'il est doté de moyens de mesures et de calculs pour mettre en oeuvre les différentes étapes du procédé selon l'invention. Le terme « deuxième » est utilisé pour distinguer le premier véhicule des autres véhicules qui évoluent au niveau de l'intersection. De même le terme « évoluer » signifie que le deuxième véhicule peut entrer dans l'intersection, ou être à l'arrêt au niveau de ladite intersection ou qu'il peut en sortir par une voie identifiée. Le deuxième véhicule peut également être situé sur la même voie d'accès à l'intersection que celle sur laquelle se trouve le premier véhicule, ledit deuxième véhicule étant placé devant ledit premier véhicule. Les règles de circulation en vigueur à l'intersection peuvent être matérialisées par tout type de panneaux de signalisation, ou par des feux. Il est supposé qu'un tel procédé est piloté par un calculateur embarqué, comme par exemple une unité centrale de calcul servant à gérer tous les équipements électriques ou électroniques du véhicule, ledit calculateur possédant le logiciel adapté.

Avantageusement, les règles de circulation en vigueur à ladite intersection sont communiquées au premier véhicule par au moins un moyen d'information à choisir parmi une carte numérique statique de l'environnement, une communication entre le premier véhicule et des bornes de communication situées sur l'infrastructure, et des capteurs extéroceptifs.

De façon préférentielle, les règles de circulation en vigueur sont indiquées par au moins un moyen à choisir parmi un panneau de signalisation et par des feux de signalisation, lesdites règles fournissant au moins une information à choisir parmi une vitesse limite autorisée au niveau de l'intersection, une signalisation d'arrêt, une signalisation de sens interdit et une signalisation de cession de passage.

Préférentiellement, l'estimation du risque de collision correspond au calcul de la probabilité qu'un des véhicules n'ait pas l'intention de s'arrêter alors qu'il le devrait. En effet, à titre d'exemple, le risque de collision est important si un deuxième véhicule devant s'arrêter à l'intersection en raison de la présence d'un stop, ne marque pas cet arrêt en continuant de rouler à vitesse réduite.

De façon avantageuse, l'étape de détermination des positions respectives du premier véhicule et dudit deuxième véhicule est complétée par une étape de détermination d'au moins un paramètre supplémentaire concernant le premier véhicule et ledit deuxième véhicule, à choisir parmi l'orientation desdits véhicules, leur vitesse et les actions du conducteur sur les commandes du véhicule. Cette liste n'est pas exhaustive et peut être complétée par d'autres paramètres, qui seraient disponibles et qui pourraient apporter des précisions supplémentaires sur l'état des véhicules en présence. A titre d'exemple, les actions du conducteur sur les commandes peuvent être représentées par une pression sur la pédale de frein ou la pédale d'accélérateur.

Avantageusement, l'étape de détermination des positions du premier véhicule et dudit deuxième véhicule ainsi que l'étape de détermination d'au moins un paramètre supplémentaire sont réalisées par l'intermédiaire de capteurs de mesure proprioceptifs et extéroceptifs embarqués sur le premier véhicule, ou par l'intermédiaire d'un lien de communication sans fil entre les véhicules. Il est rappelé que les capteurs proprioceptifs sont intégrés au premier véhicule et qu'ils apportent des renseignements sur l'état propre dudit véhicule, et que les capteurs extéroceptifs sont également embarqués dans le premier véhicule et qu'ils apportent des renseignements sur chaque deuxième véhicule. Le lien de communication sans fil permet l'échange d'informations entre les véhicules et/ou entre les véhicules et des bornes présentes sur l'infrastructure. Par exemple, le standard de communication IEEE 802.11p peut être utilisé.

De façon préférentielle, les capteurs proprioceptifs comprennent au moins un capteur à choisir parmi un navigateur de type GPS (de l'anglais *Global Positioning System*) et des données circulant sur un bus de type CAN (de l'anglais *Controller Area Network*). Cette liste n'est pas exhaustive et peut intégrer notamment d'autres types de navigateurs avec des technologies différentes.

Préférentiellement, les capteurs extéroceptifs comprennent au moins un capteur à choisir parmi une caméra embarquée, un radar, et un laser.

De façon avantageuse, un procédé d'évaluation du risque selon l'invention, est piloté par une unité centrale de calcul embarquée dans le premier véhicule. L'unité centrale de calcul pilote tous les équipements électriques et électroniques présents dans un véhicule. Il suffit de lui adjoindre un logiciel adapté, prenant en compte les différentes étapes dudit procédé, pour pouvoir piloter lesdites étapes et apporter un diagnostic précis sur le risque de collision entre le premier véhicule et chaque deuxième véhicule.

Avantageusement, le procédé comprend une étape de prise de décision ayant pour but d'agir sur le comportement routier du véhicule afin de l'adapter au risque détecté. En effet, l'un des intérêts majeurs d'un procédé d'évaluation selon l'invention est une modification du comportement routier du véhicule, afin de sécuriser le véhicule ainsi que les occupants dudit véhicule. La modification peut être obtenue par le biais d'une action automatique sur les commandes du véhicule, ou par le biais d'un message adressé au conducteur du véhicule. Ce message peut prendre la forme d'un signal à choisir parmi un signal visuel, sonore, ou haptique.

Un procédé d'évaluation du risque selon l'invention présente l'avantage d'être rapide, précis et donc parfaitement compatible avec les contraintes de temps réel liées aux applications sécuritaires. Autrement dit, si une situation de danger est détectée à l'approche d'une intersection par l'intermédiaire de ce procédé, un système avancé d'aide à la conduite de type ADAS, peut par exemple, procéder à une opération de freinage automatique. De plus, en raisonnant sur les intentions des conducteurs plutôt que sur la trajectoire des véhicules, un procédé selon l'invention permet une meilleure analyse de la scène, et une prédiction plus fiable des collisions à long terme. Enfin, un procédé selon l'invention a l'avantage de se fonder sur une approche probabiliste, permettant la prise en compte des incertitudes sur les données d'entrée et sur l'interprétation de ces données.

On donne, ci-après, une description détaillée d'un mode de réalisation préféré d'un procédé d'évaluation du risque de collision entre deux véhicules à une intersection, en se référant aux figures 1 à 3.
- La figure 1 est une vue synoptique détaillant les différentes étapes d'un procédé selon l'invention,
- La figure 2 est une vue schématique d'une première situation à une intersection,
- La figure 3 est une vue schématique d'une deuxième situation à une intersection.

Il est supposé qu'un procédé d'évaluation du risque selon l'invention est réalisé dans le premier véhicule par l'intermédiaire de moyens de mesure et de moyens de calcul, et est piloté par une unité centrale de calcul, qui est un organe central gérant les équipements électriques et électroniques du véhicule.

Un tel procédé d'évaluation du risque de collision entre un premier véhicule et au moins un deuxième véhicule évoluant au niveau d'une intersection, par exemple pour tous véhicules évoluant à une distance inférieure à 500m de l'intersection et sur une voie d'accès à ladite intersection, comprend les étapes suivantes :
- une étape de détermination des positions respectives dudit premier véhicule et de chaque deuxième véhicule, et de différents paramètres permettant de renseigner sur l'état de chacun desdits véhicules,
- une étape d'estimation des intentions du conducteur dudit premier véhicule et de chaque deuxième véhicule, en matière d'arrêt ou non à l'entrée de l'intersection et en matière de manoeuvre pour estimer la direction que compte prendre chacun desdits conducteurs à la sortie de ladite intersection,
- une étape d'estimation de la nécessité d'arrêt pour le premier véhicule et pour chaque deuxième véhicule à partir des résultats fournis par les deux étapes précédentes et des règles de la circulation en vigueur à ladite intersection,
- une étape d'estimation du risque de collision du premier véhicule avec chaque deuxième véhicule, à partir des résultats fournis par les deux étapes précédentes, ladite estimation étant basée sur une comparaison entre l'intention d'arrêt de chaque véhicule et la nécessité d'arrêt de ceux-ci,
- une étape de prise de décision ayant pour but d'agir sur le comportement routier du véhicule afin de l'adapter au risque détecté. Cette prise de décision peut se traduire par une action automatique sur des commandes du véhicule, ou par un message adressé au conducteur du véhicule. Ce message peut prendre la forme d'un signal à choisir parmi un signal visuel, sonore, ou haptique. Les commandes du véhicules comportent, par exemple, l'état des clignotants, la pédale d'accélérateur la pédale de frein et le cas échéant la pédale d'embrayage et le rapport de la boite de vitesse engagé.

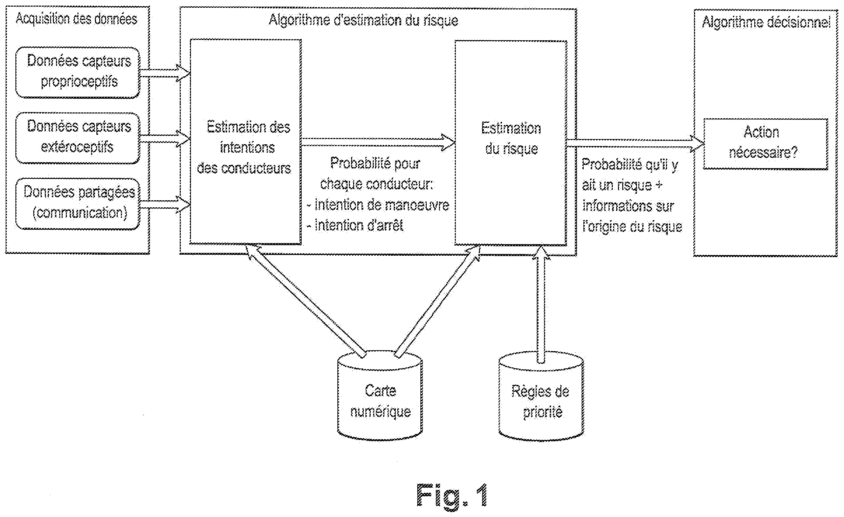

En se référant à la figure 1, l'étape de détermination des positions respectives dudit premier véhicule et de chaque deuxième véhicule, et de différents paramètres permettant de renseigner sur l'état de chacun desdits véhicules, consiste en une étape d'acquisition de données réalisée par l'intermédiaire de capteurs proprioceptifs, de capteurs extéroceptifs et de données partagées. Cette étape d'acquisition de données permet au premier véhicule d'accumuler au cours du temps des informations sur son propre état et sur son environnement statique et dynamique. Le nombre de capteurs ainsi que leur type n'est pas limité, la seule contrainte étant que lesdits capteurs doivent donner au moins une mesure de la position du premier véhicule et de chaque deuxième véhicule. Cependant, toute information supplémentaire renseignant sur l'état de chaque véhicule, est utile car elle permettra une meilleure estimation des intentions des conducteurs. A titre d'exemple, les capteurs proprioceptifs peuvent être constitués par un navigateur de type GPS, ou par des données circulant sur un bus CAN. Les capteurs extéroceptifs peuvent être représentés par exemple, par une caméra et/ou un radar et/ou un laser. Les données partagées peuvent être obtenues grâce à un lien de communication avec les autres véhicules et/ou un lien de communication avec des bornes intégrées dans l'infrastructure routière, comme par exemple un standard de communication de type IEEE 802.11p. En dehors de la position de chaque véhicule, d'autres paramètres, comme par exemple, l'orientation dans l'espace desdits véhicules, leur vitesse et les actions du conducteur sur les commandes du véhicule, peuvent constituer des sources d'information déterminantes qui permettront d'évaluer l'intention de chaque conducteur à l'intersection.

Grâce aux informations et aux données collectées lors de l'étape précédente, le procédé selon l'invention met en oeuvre une étape d'estimation des intentions du conducteur dudit premier véhicule et de chaque deuxième véhicule, en matière d'arrêt ou non à l'entrée de l'intersection et en matière de manoeuvre pour estimer la direction que compte prendre chacun desdits conducteurs à la sortie de ladite intersection. En effet, il est important de savoir si un véhicule compte s'arrêter ou non à une intersection et quelle direction il a l'intention de prendre une fois qu'il se retrouve à l'intersection, pour évaluer le risque de collision. La première étape d'acquisition de données permet ainsi d'anticiper l'intention de chaque conducteur de s'arrêter ou non à l'intersection, et de connaître la direction qu'il souhaite prendre à la sortie de l'intersection.

L'étape d'estimation de la nécessité d'arrêt pour le premier véhicule et pour chaque deuxième véhicule s'effectue à partir des résultats fournis par les deux étapes précédentes et des règles de la circulation en vigueur à ladite intersection. Les règles de circulation en vigueur à l'intersection peuvent être matérialisées par des panneaux de signalisation comme par exemple un stop, un sens interdit, une cession de passage ou une vitesse maximale autorisée, et/ou par des feux de signalisation. Ces règles de circulation en vigueur à ladite intersection, sont communiquées au premier véhicule par des moyens d'information comme par exemple, une carte numérique statique de l'environnement, une communication entre le premier véhicule et des bornes de communication situées sur l'infrastructure routière, et des capteurs extéroceptifs comme un radar ou une caméra embarquée.

L'étape d'estimation du risque de collision entre le premier véhicule et chaque deuxième véhicule, est réalisée au moyen d'une comparaison entre l'intention d'arrêt de chaque véhicule et la nécessité d'arrêt de ceux-ci.

L'intention des conducteurs est estimée en fusionnant de manière probabiliste les données disponibles sur les véhicules et sur le contexte, ce qui permet de prendre en compte les incertitudes sur les données et sur l'interprétation de ces données. Cette étape permet d'accéder à une description sémantique de la scène en répondant notamment à la question : Qui a l'intention de faire quoi, et avec quelle probabilité ?

Des modèles probabilistes d'écart de temps acceptable (en anglais *gap acceptance*) existent déjà dans la littérature, et permettent de calculer la probabilité qu'un véhicule n'ayant pas la priorité ait suffisamment de temps pour exécuter sa manoeuvre avant l'arrivée d'un véhicule prioritaire. En combinant ces modèles avec les règles de la circulation en vigueur à l'intersection, l'approche estime de manière probabiliste si un véhicule devrait s'arrêter à l'intersection ou pas.

Si on prend comme exemple une situation où un premier véhicule A s'approche d'une intersection de type cédez-le-passage, l'estimation de la nécessité d'arrêt pour ce véhicule est définie comme suit :
1. Projection de la position du véhicule A jusqu'au temps t_{A} où il atteint l'entrée de l'intersection. On peut par exemple utiliser pour cela un modèle de type « vitesse constante ».
2. Réaliser la même opération pour tous les deuxièmes véhicules B ayant priorité par rapport au véhicule A. Autrement dit, réitérer la réalisation de la projection de la position de chaque véhicule B qui est prioritaire sur le véhicule A, jusqu'au temps t_{B} où il atteint l'entrée de l'intersection. On peut également utiliser un modèle de type « vitesse constante » pour les véhicules B.
3. Identifier le plus petit intervalle de temps disponible pour le véhicule A pour effectuer sa manoeuvre avant l'arrivée de chaque véhicule prioritaire B, en comparant les temps t_{A} et t_{B} pour chaque véhicule B prioritaire.
4. La nécessité d'arrêt pour le véhicule A est calculé comme la probabilité que l'intervalle de temps calculé à l'étape précédente ne soit pas suffisant pour effectuer la manoeuvre. On peut pour cela utiliser un modèle probabiliste d'écart de temps acceptable (en anglais *gap acceptance*).

Enfin, un procédé d'évaluation du risque de collision incorpore une étape de prise de décision ayant pour but d'agir sur le comportement routier du véhicule afin de l'adapter au risque détecté. A titre d'exemple, si la probabilité de collision calculée pour le premier véhicule est élevée, mais que la vitesse dudit véhicule demeure constante à l'approche de l'intersection, un système avancé d'aide à la conduite pourra actionner automatiquement la pédale de frein pour stopper le véhicule, ou pour réduire considérablement sa vitesse.

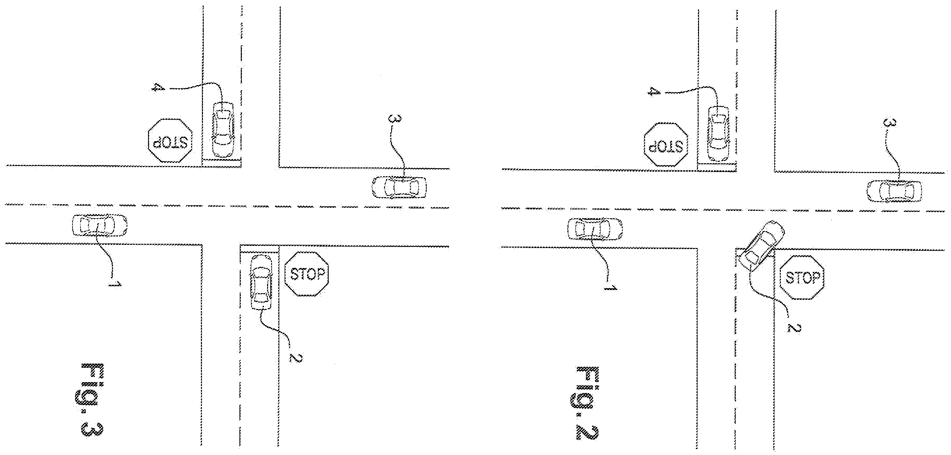

La figure 2 illustre un exemple de scénario dangereux à une intersection. Les véhicules 1 et 3 approchent de l'intersection à vitesse constante et ont la priorité d'après la signalisation. Le véhicule 4 est arrêté au stop. Le véhicule 2 est avancé et se retrouve à moitié sur la voie empruntée par les véhicules 1 et 3, et il est supposé que sa vitesse augmente.

### • Acquisition des données

Les capteurs fournissent des données sur les positions successives des véhicules, et potentiellement des informations sur leur orientation, leur vitesse, l'état de leur clignotant, etc.

### • Algorithme d'estimation du risque

### ∘ Estimation des intentions des conducteurs

En combinant les informations disponibles sur les véhicules, sur la géométrie de l'intersection et sur la signalisation, un procédé selon l'invention va permettre d'estimer de manière probabiliste que l'intention des conducteurs 1 et 3 est de traverser l'intersection sans s'arrêter, que l'intention du conducteur 4 est de céder le passage au conducteur 3, et que l'intention du conducteur 2 est de tourner à droite sans attendre.

### ∘ Estimation du risque

En comparant les intentions estimées avec les règles de circulation en vigueur à l'intersection, un procédé selon l'invention permet de calculer la probabilité que les intentions des conducteurs soient en conflit avec les règles de priorités. Cette probabilité sera faible pour les conducteurs 1, 3, 4, et élevée pour le conducteur 2 car il ne dispose pas de suffisamment de temps pour effectuer sa manoeuvre avant l'arrivée du véhicule 1 à l'intersection.

### • Algorithme de décision :

Une décision est nécessaire car la probabilité que le véhicule 2 représente un danger est grande. L'action à entreprendre dépendra de plusieurs facteurs : la valeur du risque, la configuration de la situation en évaluant s'il y a un risque de collision imminente ou pas, la vitesse des véhicules concernés, des moyens d'avertissement ou de contrôle disponibles sur le véhicule, comme par exemple, un avertisseur visuel, ou sonore, ou haptique, un actionneur des éléments de freinage automatique du véhicule.

La figure 3 illustre un exemple de scénario non dangereux à une intersection. Les véhicules 1 et 3 approchent de l'intersection à vitesse constante et ont la priorité. Les véhicules 2 et 4 sont arrêtés au stop.

### • Acquisition des données

Cette étape se déroule à l'identique de celle décrite pour le scénario dangereux ci-avant.

### • Algorithme d'estimation du risque

### ∘ Estimation des intentions des conducteurs

Pour le présent cas, le procédé selon l'invention, va permettre d'estimer de manière probabiliste que l'intention du conducteur 2 est de céder le passage au conducteur 1.

### ∘ Estimation du risque

La probabilité que les intentions des conducteurs soient en conflit avec les règles de priorités sera faible pour tous les conducteurs.

### • Algorithme de décision :

Une action n'est pas nécessaire car aucun des véhicules ne représente un danger.

## Revendications

1. Procédé d'évaluation du risque de collision entre un premier véhicule s'approchant d'une intersection et au moins un deuxième véhicule évoluant au niveau de ladite intersection, ledit premier véhicule étant doté de moyens de mesure et de moyens de calcul, le procédé comprenant les étapes suivantes,
- une étape de détermination des positions respectives dudit premier véhicule et dudit deuxième véhicule,
- une étape d'estimation des intentions du conducteur dudit premier véhicule et dudit deuxième véhicule, en matière d'arrêt ou non à l'entrée de l'intersection et en matière de manoeuvre pour estimer la direction que compte prendre chacun desdits conducteurs à la sortie de ladite intersection,
**caractérisée en ce que** le procédé comprend les étapes suivantes,
- une étape d'estimation de la nécessité d'arrêt pour le le premier véhicule et pour ledit deuxième véhicule à partir des résultats fournis par les deux étapes précédentes et des règles de la circulation en vigueur à ladite intersection,
- une étape d'estimation du risque de collision entre le premier véhicule et ledit deuxième véhicule, ladite estimation étant fondée sur une comparaison entre l'intention d'arrêt des véhicules et la nécessité d'arrêt de ceux-ci.

2. Procédé selon la revendication 1, **caractérisé en ce que** les informations concernant les règles de circulation en vigueur à ladite intersection sont communiquées au premier véhicule par au moins un moyen d'information à choisir parmi une carte numérique statique de l'environnement, une communication entre le premier véhicule et des bornes de communication situées sur l'infrastructure, et des capteurs extéroceptifs.

3. Procédé d'évaluation selon l'une quelconque des revendications 1 ou 2, **caractérisé en ce que** les règles de circulation en vigueur sont indiquées par au moins un moyen à choisir parmi un panneau de signalisation et par des feux de signalisation, et **en ce que** lesdites règles fournissent au moins une information à choisir parmi une vitesse limite autorisée au niveau de l'intersection, une signalisation d'arrêt, une signalisation de sens interdit et une signalisation de cession de passage.

4. Procédé d'évaluation selon l'une quelconque des revendications 1 à 3, **caractérisé en ce que** l'estimation du risque de collision correspond au calcul de la probabilité qu'un des véhicules n'ait pas l'intention de s'arrêter alors qu'il le devrait.

5. Procédé d'évaluation selon l'une quelconque des revendications 1 à 4, **caractérisé en ce que** l'étape de détermination des positions respectives du premier véhicule et dudit deuxième véhicule est complétée par une étape de détermination d'au moins un paramètre supplémentaire concernant le premier véhicule et chacun des deuxièmes véhicules, à choisir parmi l'orientation desdits véhicules, leur vitesse et les actions du conducteur sur les commandes du véhicule.

6. Procédé d'évaluation selon la revendication 5, **caractérisé en ce que** l'étape de détermination des positions du premier véhicule et dudit deuxième véhicule ainsi que l'étape de détermination d'au moins un paramètre supplémentaire sont réalisées par l'intermédiaire de capteurs de mesure proprioceptifs et extéroceptifs embarqués sur le premier véhicule et/ou par l'intermédiaire d'un lien de communication sans fil entre les véhicules.

7. Procédé d'évaluation selon la revendication 6, **caractérisé en ce que** les capteurs proprioceptifs comprennent au moins un capteur à choisir parmi un navigateur de type GPS et des données circulant sur un bus de type CAN.

8. Procédé selon l'une quelconque des revendications 6 ou 7, **caractérisé en ce que** les capteurs extéroceptifs comprennent au moins un capteur choisir parmi une caméra embarquée, un radar, et un laser.

9. Procédé d'évaluation selon l'une quelconque des revendications 1 à 8, **caractérisé en ce qu'**il est piloté par une unité centrale de calcul embarquée dans le premier véhicule.

10. procédé d'évaluation selon l'une quelconque des revendications 1 à 9, **caractérisé en ce qu'**il comprend une étape de prise de décision ayant pour but d'agir sur le comportement routier du véhicule afin de l'adapter au risque détecté.

## Patentansprüche

1. Verfahren zur Beurteilung des Kollisionsrisikos zwischen einem ersten Fahrzeug, das sich einem Schnittpunkt nähert, und mindestens einem zweiten Fahrzeug, das sich im Bereich des Schnittpunkts bewegt, wobei das erste Fahrzeug mit Messmitteln und mit Rechenmitteln ausgestattet ist, wobei das Verfahren die folgenden Schritte umfasst:
- einen Bestimmungsschritt der jeweiligen Positionen des ersten Fahrzeugs und des zweiten Fahrzeugs,
- einen Schätzungsschritt der Absichten des Fahrers des ersten Fahrzeugs und des zweiten Fahrzeugs in Bezug auf das Anhalten oder nicht am Eintritt in den Schnittpunkt und in Bezug auf das Manöver, um die Richtung abzuschätzen, welche jeder der Fahrer am Austritt aus dem Schnittpunkt einzuschlagen beabsichtigen,
**dadurch gekennzeichnet, dass** das Verfahren die folgenden Schritte umfasst:
- einen Schätzungsschritt der Notwendigkeit des Anhaltens für das erste Fahrzeug und für das zweite Fahrzeug auf der Basis der von den zwei vorangehenden Schritten bereitgestellten Ergebnissen und den am Schnittpunkt geltenden Verkehrsregeln,
- einen Schätzungsschritt des Kollisionsrisikos zwischen dem ersten Fahrzeug und dem zweiten Fahrzeug, wobei die Schätzung auf einem Vergleich zwischen der Absicht des Anhaltens der Fahrzeuge und der Notwendigkeit des Anhaltens derselben beruht.

2. Verfahren nach Anspruch 1, **dadurch gekennzeichnet, dass** die Informationen in Bezug auf die am Schnittpunkt geltenden Verkehrsregeln dem ersten Fahrzeug von mindestens einem Informationsmittel, auszuwählen aus einer statischen digitalen Karte der Umgebung, einer Kommunikation zwischen dem ersten Fahrzeug und Kommunikationsstellen innerhalb der Infrastruktur, und exterozeptiven Sensoren mitgeteilt werden.

3. Beurteilungsverfahren nach einem der Ansprüche 1 oder 2, **dadurch gekennzeichnet, dass** die geltenden Verkehrsregeln von mindestens einem Mittel angegeben werden, auszuwählen aus einem Verkehrsschild und Ampeln, und dass die Regeln mindestens eine Information bereitstellen, auszuwählen aus einer zulässigen Höchstgeschwindigkeit im Bereich des Schnittpunkts, eines Anhaltezeichens, einer Richtungsverbotsanzeige und einer Vorfahrtsanzeige.

4. Beurteilungsverfahren nach einem der Ansprüche 1 bis 3, **dadurch gekennzeichnet, dass** die Schätzung des Kollisionsrisikos der Berechnung der Wahrscheinlichkeit entspricht, dass eines der Fahrzeuge nicht beabsichtigt anzuhalten, obwohl es dies müsste.

5. Beurteilungsverfahren nach einem der Ansprüche 1 bis 4, **dadurch gekennzeichnet, dass** der Bestimmungsschritt der jeweiligen Positionen des ersten Fahrzeugs und des zweiten Fahrzeugs durch einen Bestimmungsschritt mindestens eines zusätzlichen Parameters ergänzt wird, welcher das erste Fahrzeug und jedes der zweiten Fahrzeuge betrifft, auszuwählen aus der Richtung der Fahrzeuge, ihrer Geschwindigkeit und den Handlungen des Fahrers an den Steuerungen des Fahrzeugs.

6. Beurteilungsverfahren nach Anspruch 5, **dadurch gekennzeichnet, dass** der Bestimmungsschritt der Positionen des ersten Fahrzeugs und des zweiten Fahrzeugs sowie der Bestimmungsschritt mindestens eines zusätzlichen Parameters mit Hilfe propriozeptiver und exterozeptiver On-Board-Messensoren des ersten Fahrzeug und/oder mit Hilfe einer drahtlosen Kommunikationsverbindung zwischen den Fahrzeugen durchgeführt werden.

7. Beurteilungsverfahren nach Anspruch 6, **dadurch gekennzeichnet, dass** die propriozeptiven Sensoren mindestens einen Sensor umfassen, auszuwählen aus einem Navigator vom Typ GPS und Daten, die über einen Bus vom CAN laufen.

8. Verfahren nach einem der Ansprüche 6 oder 7, **dadurch gekennzeichnet, dass** die exterozeptiven Sensoren mindestens einen Sensor umfassen, auszuwählen aus einer On-Board-Kamera, einem Radar und einem Laser.

9. Beurteilungsverfahren nach einem der Ansprüche 1 bis 8, **dadurch gekennzeichnet, dass** es von einer zentralen On-Board-Rechenzentrale im ersten Fahrzeug gesteuert wird.

10. Beurteilungsverfahren nach einem der Ansprüche 1 bis 9, **dadurch gekennzeichnet, dass** es einen Entscheidungsfindungsschritt umfasst, der zum Ziel hat, auf das Fahrverhalten des Fahrzeugs einzuwirken, um es an das ermittelte Risiko anzupassen.

## Claims

1. A method for assessing the risk of collision between a first vehicle approaching an intersection and at least one second vehicle traveling at said intersection, said first vehicle being provided with measuring means and computing means, the method comprising the following steps:
- a step for determining the respective positions of said first vehicle and said second vehicle,
- a step for estimating intentions of the driver of said first vehicle and said second vehicle, in terms of stopping or not stopping at the entry to the intersection and maneuvering, in order to estimate the direction that each of said drivers intends to take upon leaving said intersection,
**characterized in that** the method comprises the following steps:
- a step for estimating the need to stop for the [first] vehicle and for said second vehicle, from results provided by the two preceding steps and traffic rules in force at said intersection,
- a step for estimating the collision risk between the first vehicle and said second vehicle, said estimate being based on a comparison between the intention of the vehicles to stop and the need for the vehicles to stop.

2. The method according to claim 1, **characterized in that** the information regarding the traffic rules in force at said intersection is communicated to the first vehicle by at least one information means to be chosen from among a static digital map of the environment, a communication between the first vehicle and communication terminals situated on the infrastructure, and exteroceptive sensors.

3. The assessment method according to any one of claims 1 or 2, **characterized in that** the traffic rules in force are indicated by at least one means to be chosen from among a signaling panel and signaling lights, and **in that** said rules provide at least one piece of information to be chosen from among a maximum speed authorized at the intersection, a stop signal, a no entry signal and a yield signal.

4. The assessment method according to any one of claims 1 to 3, **characterized in that** the estimate of the collision risk corresponds to the calculation of the likelihood of one of the vehicles not intending to stop when it should.

5. The assessment method according to any one of claims 1 to 4, **characterized in that** the step for determining respective positions of the first vehicle and said second vehicle is completed by a step for determining at least one additional parameter regarding the first vehicle and each of the second vehicles, to be chosen from among the orientation of said vehicles, their speed, and the driver's actions on the controls of the vehicle.

6. The assessment method according to claim 5, **characterized in that** the step for determining the positions of the first vehicle and said second vehicle as well as the step for determining at least one additional parameter are carried out using proprioceptive and exteroceptive measuring sensors on board the first vehicle and/or via a wireless communication link between the vehicles.

7. The assessment method according to claim 6, **characterized in that** the proprioceptive sensors comprise at least one sensor to be chosen from among a GPS-type navigator and data circulating on an ADC-type bus.

8. The method according to any one of claims 6 or 7, **characterized in that** the exteroceptive sensors comprise at least one sensor chosen from among an onboard camera, a radar, and the laser.

9. The assessment method according to any one of claims 1 to 8, **characterized in that** it is controlled by a central processing unit on board the first vehicle.

10. The assessment method according to any one of claims 1 to 9, **characterized in that** it comprises a decision-making step intended to act on the road behavior of the vehicle in order to adapt it to the detected risk.
